# FASCICULE DE BREVET EUROPEEN

(11) **EP 3 331 741 B1**
(45) Date de publication et mention de la délivrance du brevet: **01.05.2019**
(21) Numéro de dépôt: 16744817.4
(22) Date de dépôt: 08.07.2016
(51) Int. Cl.: B60W 50/10, B60W 50/14, B60W 30/16

(54) **PROCÉDÉ DE FONCTIONNEMENT D'UN SYSTÈME AUTOMATISÉ D'ASSISTANCE À LA CONDUITE D'UN VÉHICULE AUTOMOBILE**
VERFAHREN ZUM BETREIBEN EINES AUTOMATISCHEN KRAFTFAHRZEUGFAHRASSISTENZSYSTEMS
METHOD FOR OPERATING AN AUTOMATED MOTOR-VEHICLE DRIVE ASSISTANCE SYSTEM

(30) Priorité: 03.08.2015 FR 1557470
(43) Date de publication de la demande: 13.06.2018
(73) Titulaire: PSA AUTOMOBILES S.A., 78300 Poissy (FR)
(72) Inventeur: FERON, Stéphane, 92350 Le Plessis Robinson (FR); TACCORI DUVERGEY, Céline, 92120 Montrouge (FR); LAINE, Vincent, 78340 Les Clayes sous Bois (FR); DRAP, Raphaël, 78120 Rambouillet (FR); ETCHEVERRY, Céline, 91370 Verrieres Le Buisson (FR)
(74) Mandataire: Jeannin, Laurent Jean-Pierre
(86) Numéro de dépôt international: PCT/FR2016/051762
(87) Numéro de publication internationale: WO 2017/021602

(56) Documents cités:
- EP-A1- 2 769 895
- DE-A1-102013 225 759
- FR-A1- 3 005 925
- US-A1- 2014 018 993
- US-A1- 2014 303 827
- US-A1- 2015 088 358

## Description

### Domaine de l'invention

La présente invention concerne le domaine des systèmes d'assistance à la conduite d'un véhicule automobile. Elle concerne en particulier un procédé de fonctionnement d'un tel système.

### Arrière-plan de l'invention

Les systèmes d'assistance à la conduite sont désormais largement répandus dans les véhicules automobiles.

On connaît par exemple les régulateurs de vitesse adaptatifs, mieux connus sous l'acronyme anglais ACC (pour « Adaptive Cruise Control »). Un tel mode d'assistance ajuste de manière automatique la vitesse afin de maintenir un intervalle de sécurité constant avec le véhicule précédant l'utilisateur à partir des informations recueillis sur ce véhicule (notamment la distance et la vitesse d'approche) à l'aide d'un ou plusieurs capteurs de type radar, lidar ou caméra.

Plus récemment, sont apparus des dispositifs dynamiques anti-franchissement involontaire de ligne. Ces derniers, désignés généralement sous les acronymes ALKA (pour « Active Lane Keep Assist »), LKAS (pour « Lane Keep Assistance System), ALA (pour « Active Lane Assist) ou encore ALC (pour « Active Lane Control ») détectent les lignes de marquages au sol à l'aide de capteurs et/ou de caméras optiques, et interviennent dynamiquement sur le véhicule lorsque ce dernier s'écarte de sa voie de circulation. Dans un tel cas de figure, le système d'assistance à la conduite va alors corriger automatiquement de la direction du véhicule et/ou activer le freinage.

Depuis peu, des modes d'assistance à la conduite automatisée commencent à apparaître afin de soulager le conducteur dans des situations de trafic dense ou sur des routes à chaussées séparées.

La demande de brevet française FR 3 005 925 divulgue un système automatisé d'assistance à la conduite proposant un tel mode de conduite entièrement autonome dans lequel le système automatisé contrôle simultanément le déplacement longitudinal et le déplacement latéral du véhicule.

En réponse à une action effectuée par le conducteur (appui sur la pédale de frein ou sur celle d'accélération), interprétée comme une volonté de sortir de ce mode de conduite entièrement autonome et de repasser en mode manuel, le système automatisé passe automatiquement dans un mode de conduite semi-autonome dans lequel le conducteur reprend le contrôle du déplacement longitudinal du véhicule tandis que ce système continue à gérer son déplacement latéral.

Dès que le conducteur reprend en mains le volant du véhicule, le système interrompt alors le mode semi-autonome et passe en mode manuel dans lequel ce conducteur contrôle simultanément le déplacement longitudinal et le déplacement latéral du véhicule.

Par ailleurs, lorsque la pression d'appui sur la pédale de frein ou sur celle d'accélération est inférieure à un seuil prédéfini et que le conducteur relâche rapidement cette pédale avant un délai prédéterminé de quelques secondes, le système en déduit que la volonté de repasser en mode manuel n'est pas suffisamment affirmée par ce conducteur. Le système interrompt alors le mode semi-autonome et repasse dans le mode de conduite entièrement autonome.

Dans un tel cas d'appui fortuit par le conducteur sur l'une des pédales, les quelques secondes passées en mode semi-automatique durant lesquelles ce conducteur reprend le contrôle du déplacement longitudinal sans forcément en être conscient peuvent s'avérer particulièrement accidentogènes.

En outre, ce système peut provoquer des retours intempestifs dans le mode de conduite entièrement autonome lorsqu'un tel appui court et peu marqué traduit malgré tout la volonté du conducteur de reprendre une conduite purement manuelle du véhicule.

### Objet et résumé de l'invention

La présente invention vise donc à assurer une transition plus sereine entre les modes de conduite entièrement autonome, semi-autonome et manuel.

Elle propose à cet effet un procédé de fonctionnement d'un système automatisé d'assistance à la conduite d'un véhicule automobile comportant :
- une étape initiale de conduite dans un mode entièrement autonome dans lequel le déplacement longitudinal et le déplacement latéral du véhicule sont entièrement gérés par le système automatisé ;
- une étape de conduite dans un mode transitoire dans lequel le système réduit progressivement la vitesse du véhicule tout en gardant le contrôle de son déplacement latéral, cette étape étant activée depuis le mode entièrement autonome par la détection d'une première action du conducteur interprétée comme une volonté de sortir de ce mode de conduite entièrement autonome ;
- une étape de conduite en mode manuel activée depuis le mode transitoire suite à la détection de la reprise en mains du volant du véhicule par le conducteur ; et
- au moins une étape de retour dans le mode de conduite entièrement autonome activée depuis le mode transitoire suite à la détection d'une seconde action du conducteur différente de la première et interprétée comme une volonté de revenir vers le mode de conduite entièrement autonome.

En réduisant progressivement la vitesse du véhicule lorsque le mode transitoire est activé, le procédé selon l'invention permet au conducteur de s'apercevoir quasi-instantanément de l'arrêt du mode de conduite entièrement autonome, ce qui lui donne la possibilité de réagir plus rapidement (dans le cas par exemple où ce changement résulte d'un mouvement non volontaire de sa jambe ou d'une erreur de manipulation) en prenant en mains le volant ou en réactivant le mode de conduite entièrement autonome.

En outre et du fait que les actions entrainant respectivement le passage vers le mode transitoire et le retour vers le mode entièrement autonome soient parfaitement distinctes, le procédé selon l'invention ne permet aucune ambigüité dans l'interprétation par le système des véritables intentions du conducteur

Selon des caractéristiques préférées du procédé selon l'invention, prises seules ou en combinaison :
- la ou les actions devant être interprétées par le système comme une volonté du conducteur de revenir vers le mode de conduite entièrement autonome peuvent varier en fonction de la première action préalablement effectuée par le conducteur et ayant provoquée le passage vers le mode de conduite transitoire ;
- la première action consiste en un appui du conducteur sur la pédale de frein ou en une certaine manipulation d'un organe de commande du système ;
- les manipulations devant être interprétées comme une volonté de sortir du mode de conduite entièrement autonome sont l'appui sur le bouton de désactivation du mode d'assistance à la conduite en cours, ainsi que le déplacement du sélecteur du mode d'assistance à la conduite vers la position arrêt ou vers un autre mode d'assistance à la conduite ;
- les manipulations devant être interprétées comme une volonté de revenir vers le mode de conduite entièrement autonome sont comprises parmi les manipulations suivantes : l'appui sur l'un des deux boutons d'ajustement à la hausse ou à la baisse d'une vitesse de consigne, l'appui sur le bouton d'activation du mode d'assistance sélectionné, et le repositionnement du sélecteur de mode vers le mode d'assistance entièrement autonome ;
- le système s'efforce de suivre une vitesse de consigne prédéfinie en maintenant une distance minimale de sécurité avec le véhicule précédant lors de la conduite dans le mode entièrement autonome ;
- la vitesse de consigne prédéfinie peut varier entre l'étape initiale de conduite dans le mode entièrement autonome et l'étape de retour dans ce même mode en fonction des première et seconde actions effectuées par le conducteur ;
- le système continue à maintenir une distance minimale de sécurité avec le véhicule précédant lors de la conduite dans le mode transitoire ; et/ou
- le système émet une alerte visuelle et/ou sonore notifiant au conducteur qu'il doit reprendre le contrôle du véhicule lorsque la vitesse du véhicule passe en dessous d'un seuil prédéterminé pendant la conduite dans le mode transitoire.

### Brève description des dessins

L'exposé de l'invention sera maintenant poursuivi par la description détaillée d'un exemple de réalisation, donnée ci-après à titre illustratif mais non limitatif, en référence aux dessins annexés, sur lesquels la figure unique est un organigramme du procédé selon l'invention de fonctionnement d'un système automatisé d'assistance à la conduite d'un véhicule automobile.

### Description détaillée d'un mode préféré de réalisation

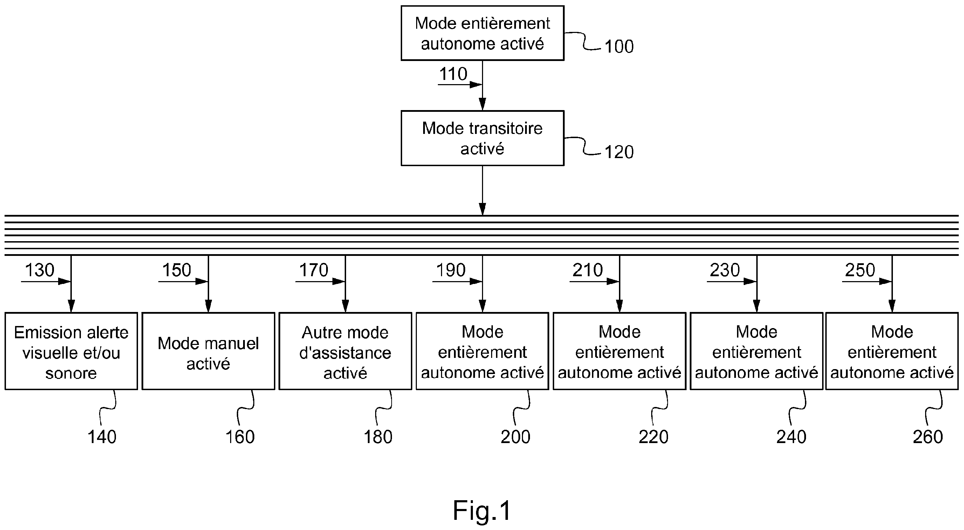

Le procédé selon l'invention dont l'organigramme est représenté sur la figure 1, est destiné à gérer le fonctionnement d'un système automatisé d'assistance à la conduite d'un véhicule automobile.

Un tel système propose par exemple au conducteur de choisir à l'aide d'un sélecteur dédié (telle qu'une molette de sélection située derrière le volant), un mode d'assistance à la conduite parmi au moins deux modes offrant des niveaux de délégation différents (mode de type AAC où le système contrôle seulement le déplacement longitudinal du véhicule en s'efforçant de suivre une vitesse de consigne prédéfinie tout en maintenant une distance minimale de sécurité avec le véhicule précédant, ou bien mode entièrement autonome dans lequel le système contrôle en sus le déplacement latéral du véhicule). Ce sélecteur présente également une position neutre permettant au conducteur, s'il le souhaite, de ne sélectionner aucun mode d'assistance à la conduite.

Le mode sélectionné peut ensuite être activé par le conducteur à l'aide d'un bouton d'activation (tel qu'un push situé à l'extrémité de la molette de sélection) pour être mis en oeuvre (cette activation n'étant toutefois possible que si le contexte de conduite actuel le permet). Deux boutons complémentaires (implantés par exemple à proximité de la molette de sélection) sont également prévues afin de permettre au conducteur d'ajuster respectivement à la hausse ou à la baisse la vitesse de consigne du véhicule.

Le mode d'assistance à la conduite en cours peut être désactivé automatiquement par le système lorsque le contexte de conduite ne permet plus sa poursuite, ou manuellement par le conducteur grâce à un bouton de désactivation éventuellement dédié mais se confondant de préférence avec celui d'activation lorsque ce dernier est de type push (un premier appui entrainant l'activation du mode tandis qu'un second appui provoque au contraire sa désactivation).

Pour mettre en oeuvre ces différents modes d'assistance, le système comprend une pluralité d'actionneurs, aptes à contrôler la direction, l'accélération, le freinage et la boîte de vitesse du véhicule : ces derniers étant pilotés par une unité de commande apte à communiquer avec d'autres équipements du véhicule tels que le module d'évaluation du contexte de conduite, le module de surveillance du conducteur ou encore le module d'information et d'alerte.

L'unité de pilotage est dotée d'un calculateur et d'un module de stockage qui comprend de la mémoire non volatile de type EEPROM ou FLASH et de la mémoire vive.

Cette mémoire non volatile stocke notamment le procédé selon l'invention sous la forme d'un programme comprenant des lignes de commande et destiné à être mis en oeuvre par ce calculateur.

On va maintenant décrire en détails et à l'appui de l'organigramme de la figure 1, les différentes étapes de ce processus.

Celui-ci est initié lorsque le mode d'assistance à la conduite entièrement autonome est activé (étape initiale 100).

La détection, à partir de mode entièrement autonome, d'une première action du conducteur interprétée comme une volonté de sortir de ce mode de conduite entièrement autonome (événement 110), va entrainer le passage automatique dans un mode d'assistance transitoire pendant lequel le système réduit progressivement la vitesse du véhicule par une décélération douce tout en gardant le contrôle de son déplacement latéral et en maintenant une distance minimale de sécurité avec le véhicule précédant (étape 120).

Cette première action consiste en un appui du conducteur sur la pédale de frein ou en une certaine manipulation d'un organe de commande du système (l'appui sur le bouton de désactivation du mode d'assistance à la conduite en cours, ou alors le déplacement du sélecteur du mode d'assistance à la conduite vers la position arrêt ou vers un autre mode d'assistance à la conduite).

Par contre, l'appui sur la pédale d'accélérateur ou la reprise en mains du volant ne sont pas interprétées par le système comme une volonté du conducteur de sortir de ce mode de conduite entièrement autonome, mais comme un désir de reprendre ponctuellement un contrôle manuel de l'une de ces deux commandes du véhicule.

Dans l'éventualité où la vitesse du véhicule passe en dessous d'un seuil prédéterminé (correspondant par exemple à la vitesse minimale autorisée sur le tronçon de route actuellement emprunté) alors que ce mode transitoire est en cours, ou au terme d'un délai prédéterminé passé dans ce mode transitoire (événement 130), le système émet une alerte visuelle et/ou sonore notifiant au conducteur qu'il doit reprendre le contrôle du véhicule (étape 140).

Lorsque le processus détecte la reprise en mains du volant par le conducteur (grâce par exemple à un capteur capacitif ou de pression intégré dans ce volant) durant ce mode transitoire (événement 150), le système active automatiquement le mode de conduite manuel (étape 160).

La sortie du mode transitoire n'est toutefois pas systématiquement associée au passage vers ce mode de conduite manuel.

Ainsi, si le conducteur appuie sur le bouton d'activation alors que le passage vers le mode transitoire résulte du déplacement du sélecteur vers un autre mode d'assistance à la conduite (événement 170), le système active alors automatiquement cet autre mode d'assistance sous réserve que le contexte de conduite actuel le permette (étape 180).

On peut également envisager que l'action ayant causée la venue dans ce mode transitoire résulte d'une erreur de manipulation ou d'un mouvement non volontaire de la jambe du conducteur. Le processus selon l'invention répond à cette problématique en comprenant plusieurs étapes de retour dans le mode de conduite entièrement autonome depuis ce mode transitoire suite à la détection d'une seconde action du conducteur différente de la première et interprétée comme une volonté de revenir vers le mode de conduite entièrement autonome.

En l'espèce, la ou les actions devant être interprétées par le système comme une volonté de sortir du mode transitoire varient en fonction de la première action préalablement effectuée par le conducteur et ayant provoquée le passage vers ce mode de conduite transitoire.

Ces dernières correspondent, suivant les circonstances, soit à un appui sur la pédale d'accélération, soit en une certaine manipulation d'un organe de commande du système (un appui sur l'un des deux boutons d'ajustement à la hausse ou à la baisse de la vitesse de consigne, un appui sur le bouton d'activation du mode d'assistance sélectionné, un repositionnement du sélecteur de mode vers le mode d'assistance entièrement autonome).

On va maintenant préciser l'ensemble des différentes éventualités pouvant se présenter.

Dans le cas de figure où le passage vers le mode transitoire a été causé par un appui sur la pédale de frein ou par un appui sur le bouton de désactivation :
- un appui sur la pédale d'accélération (événement 190) entrainera un retour vers ce mode d'assistance entièrement autonome avec comme vitesse de consigne la vitesse courante du véhicule au moment où le conducteur relâche cette pédale d'accélération (étape 200) ;
- un appui sur l'un des deux boutons d'ajustement à la hausse ou à la baisse de la vitesse de consigne (événement 210) entrainera un retour vers ce mode d'assistance entièrement autonome avec comme vitesse de consigne la vitesse courante du véhicule au moment de l'appui sur l'un de ces boutons d'ajustement (étape 220) ;
- un appui sur le bouton d'activation (événement 230) entrainera un retour vers ce mode d'assistance entièrement autonome avec comme vitesse de consigne celle appliquée précédemment dans ce mode entièrement autonome juste avant le passage en mode transitoire (étape 240).

Dans le cas de figure où le passage vers le mode transitoire a été causé par un déplacement du sélecteur vers la position arrêt ou vers un autre mode d'assistance à la conduite (événement 250), un repositionnement de ce sélecteur vers le mode d'assistance entièrement autonome entrainera un retour vers ce dernier mode avec comme vitesse de consigne celle appliquée précédemment dans ce mode entièrement autonome juste avant le passage en mode transitoire (étape 260).

D'une manière générale, on rappelle que la présente invention ne se limite pas aux formes de réalisation décrites et représentées, mais qu'elle englobe toute variante d'exécution à la portée de l'homme du métier.

En particulier, les première et seconde actions entrainant respectivement le passage vers le mode transitoire ou le retour vers le mode entièrement autonome peuvent être différentes de celles présentées ci-avant.

## Revendications

1. Procédé de fonctionnement d'un système automatisé d'assistance à la conduite d'un véhicule automobile comportant :
- une étape initiale de conduite dans un mode entièrement autonome dans lequel le déplacement longitudinal et le déplacement latéral du véhicule sont entièrement gérés par le système automatisé (100) ;
- une étape de conduite dans un mode transitoire dans lequel le système réduit progressivement la vitesse du véhicule tout en gardant le contrôle de son déplacement latéral (120), cette étape étant activée depuis le mode entièrement autonome par la détection d'une première action du conducteur interprétée comme une volonté de sortir de ce mode de conduite entièrement autonome (110) ;
- une étape de conduite en mode manuel (160) activée depuis le mode transitoire suite à la détection de la reprise en mains du volant du véhicule par le conducteur (150) ; le procédé étant **caractérisé par**
- au moins une étape de retour dans le mode de conduite entièrement autonome (200, 220, 240, 260) activée depuis le mode transitoire suite à la détection d'une seconde action du conducteur différente de la première et interprétée comme une volonté de revenir vers le mode de conduite entièrement autonome (190, 210, 230, 250).

2. Procédé de fonctionnement d'un système automatisé d'assistance à la conduite selon la revendication 1, **caractérisé en ce que** la ou les actions devant être interprétées par le système comme une volonté du conducteur de revenir vers le mode de conduite entièrement autonome peuvent varier en fonction de la première action préalablement effectuée par le conducteur et ayant provoquée le passage vers le mode de conduite transitoire.

3. Procédé de fonctionnement d'un système automatisé d'assistance à la conduite selon l'une des revendications 1 ou 2, **caractérisé en ce que** la première action consiste en un appui du conducteur sur la pédale de frein ou en une certaine manipulation d'un organe de commande du système.

4. Procédé de fonctionnement d'un système automatisé d'assistance à la conduite selon la revendication 3, **caractérisé en ce que** les manipulations devant être interprétées comme une volonté de sortir du mode de conduite entièrement autonome sont l'appui sur le bouton de désactivation du mode d'assistance à la conduite en cours, ainsi que le déplacement du sélecteur du mode d'assistance à la conduite vers la position arrêt ou vers un autre mode d'assistance à la conduite.

5. Procédé de fonctionnement d'un système automatisé d'assistance à la conduite selon l'une des revendications 1 à 4, **caractérisé en ce que** la seconde action interprétée comme une volonté de revernir vers le mode de conduite entièrement autonome consiste en un appui du conducteur sur la pédale d'accélération ou en une certaine manipulation d'un organe de commande du système.

6. Procédé de fonctionnement d'un système automatisé d'assistance à la conduite selon la revendication 5, **caractérisé en ce que** les manipulations devant être interprétées comme une volonté de revenir vers le mode de conduite entièrement autonome sont comprises parmi les manipulations suivantes : l'appui sur l'un des deux boutons d'ajustement à la hausse ou à la baisse d'une vitesse de consigne, l'appui sur le bouton d'activation du mode d'assistance sélectionné, et le repositionnement du sélecteur de mode vers le mode d'assistance entièrement autonome.

7. Procédé de fonctionnement d'un système automatisé d'assistance à la conduite selon l'une des revendications 1 à 6, **caractérisé en ce que** le système s'efforce de suivre une vitesse de consigne prédéfinie en maintenant une distance minimale de sécurité avec le véhicule précédant lors de la conduite dans le mode entièrement autonome.

8. Procédé de fonctionnement d'un système automatisé d'assistance à la conduite selon la revendication 7, **caractérisé en ce que** la vitesse de consigne prédéfinie peut varier entre l'étape initiale de conduite dans le mode entièrement autonome (100) et l'étape de retour dans ce même mode (200, 220, 240, 260) en fonction des première et seconde actions effectuées par le conducteur.

9. Procédé de fonctionnement d'un système automatisé d'assistance à la conduite selon l'une des revendications 7 ou 8, **caractérisé en ce que** le système continue à maintenir une distance minimale de sécurité avec le véhicule précédant lors de la conduite dans le mode transitoire.

10. Procédé de fonctionnement d'un système automatisé d'assistance à la conduite selon l'une des revendications 1 à 9, **caractérisé en ce que** le système émet une alerte visuelle et/ou sonore notifiant au conducteur qu'il doit reprendre rapidement le contrôle du véhicule (140) lorsque la vitesse du véhicule passe en dessous d'un seuil prédéterminé pendant la conduite dans le mode transitoire (130).

## Patentansprüche

1. Verfahren zum Betreiben eines automatischen Kraftfahrzeugfahrassistenzsystems, das Folgendes umfasst:
- einen anfänglichen Fahrschritt in einem vollautomatischen Modus, bei dem die Längsbewegung und die seitliche Bewegung des Fahrzeugs vollständig von dem automatischen System (100) verwaltet werden;
- einen Fahrschritt in einem Übergangsmodus, bei dem das System die Geschwindigkeit des Fahrzeugs allmählich reduziert, während es die Kontrolle über seine seitliche Bewegung (120) behält, wobei dieser Schritt ausgehend von dem vollautomatischen Modus durch das Erfassen einer ersten Aktion des Fahrers, die als ein Wille ausgelegt wird, diesen vollautomatischen Fahrmodus zu verlassen, aktiviert wird (110);
- einen Fahrschritt im manuellen Modus (160), der ausgehend von dem Übergangsmodus im Anschluss an das Erfassen des Wiederergreifens des Lenkrads des Fahrzeugs durch den Fahrer aktiviert wird (150); Verfahren **gekennzeichnet durch**
- mindestens einen Schritt der Rückkehr in den vollautomatischen Fahrmodus (200, 220, 240, 260), der ausgehend von dem Übergangsmodus im Anschluss an das Erfassen einer zweiten Aktion des Fahrers, die von der ersten unterschiedlich ist und als ein Wille ausgelegt wird, zu dem vollautomatischen Modus (190, 210, 230, 250) zurückzukehren, aktiviert wird.

2. Verfahren zum Betreiben eines automatischen Fahrassistenzsystems nach Anspruch 1, **dadurch gekennzeichnet, dass** die Aktion oder die Aktionen, die von dem System als Wille des Fahrers, zu dem vollautomatischen Fahrmodus zurückzukehren, ausgelegt werden müssen, in Abhängigkeit von der ersten Aktion, die vorab von dem Fahrer ausgeführt wird und die das Übergehen zu dem Übergangsfahrmodus bewirkt hat, variieren können.

3. Verfahren zum Betreiben eines automatischen Fahrassistenzsystems nach einem der Ansprüche 1 oder 2, **dadurch gekennzeichnet, dass** die erste Aktion aus einem Druck des Fahrers auf das Bremspedal oder aus einer bestimmten Manipulation eines Steuerorgans des Systems besteht.

4. Verfahren zum Betreiben eines automatischen Fahrassistenzsystems nach Anspruch 3, **dadurch gekennzeichnet, dass** die Manipulationen, die als ein Wunsch, den vollautomatischen Fahrmodus zu verlassen, ausgelegt werden müssen, der Druck auf den Deaktivierungsknopf des aktuellen Fahrassistenzmodus sowie das Bewegen des Fahrassistenzmodusauswählers zu der Stoppposition oder zu einem anderen Fahrassistenzmodus sind.

5. Verfahren zum Betreiben eines automatischen Fahrassistenzsystems nach einem der Ansprüche 1 bis 4, **dadurch gekennzeichnet, dass** die zweite Aktion, die als ein Wille, zu dem vollautomatischen Fahrmodus zurückzukehren, ausgelegt werden muss, aus einem Druck des Fahrers auf das Gaspedal oder aus einer bestimmten Manipulation eines Steuerorgans des Systems besteht.

6. Verfahren zum Betreiben eines automatischen Fahrassistenzsystems nach Anspruch 5, **dadurch gekennzeichnet, dass** die Manipulationen, die als ein Wille, zu dem vollautomatischen Fahrmodus zurückzukehren, ausgelegt werden müssen, zu den folgenden Manipulationen gehören: der Druck auf einen der zwei Einstellknöpfe zum Erhöhen oder Verringern einer Sollgeschwindigkeit, der Druck auf den Aktivierungsknopf des ausgewählten Unterstützungsmodus, und das Umpositionieren des Modusauswählers zu dem vollautomatischen Unterstützungsmodus.

7. Verfahren zum Betreiben eines automatischen Fahrassistenzsystems nach einem der Ansprüche 1 bis 6, **dadurch gekennzeichnet, dass** sich das System bemüht, einer vordefinierten Sollgeschwindigkeit zu folgen, indem es einen Sicherheitsmindestabstand zu dem vorhergehenden Fahrzeug bei dem Fahren in dem vollautomatischen Modus einhält.

8. Verfahren zum Betreiben eines automatischen Fahrassistenzsystems nach Anspruch 7, **dadurch gekennzeichnet, dass** die vordefinierte Sollgeschwindigkeit zwischen dem anfänglichen Fahrschritt in dem vollautomatischen Modus (100) und dem Schritt des Zurückkehrens zu diesem selben Modus (200, 220, 240, 260) in Abhängigkeit von der ersten und zweiten Aktion, die von dem Fahrer ausgeführt werden, variieren kann.

9. Verfahren zum Betreiben eines automatischen Fahrassistenzsystems nach einem der Ansprüche 7 oder 8, **dadurch gekennzeichnet, dass** das System weiterhin einen Sicherheitsmindestabstand zu dem vorhergehenden Fahrzeug bei dem Fahren in dem Übergangsmodus beibehält.

10. Verfahren zum Betreiben eines automatischen Fahrassistenzsystems nach einem der Ansprüche 1 bis 9, **dadurch gekennzeichnet, dass** das System eine visuelle und/oder akustische Warnung ausgibt, um dem Fahrer zu melden, dass er rasch die Kontrolle über das Fahrzeug wieder übernehmen muss (140), wenn die Geschwindigkeit des Fahrzeugs während des Fahrens in dem Übergangsmodus (130) unter einen vorbestimmten Schwellenwert fällt.

## Claims

1. A method for operating an automated motor-vehicle drive assistance system comprising:
- an initial step of driving in an entirely autonomous mode in which the longitudinal displacement and the lateral displacement of the vehicle are entirely managed by the automated system (100);
- a step of driving in a transitional mode in which the system progressively reduces the speed of the vehicle while maintaining control of its lateral displacement (120), this step being activated from the entirely autonomous mode by detection of a first action of the driver interpreted as a wish to exit this entirely autonomous driving mode (110);
- a step of driving in manual mode (160) activated from the transitional mode following the detection that the hands have been placed back on the steering wheel of the vehicle by the driver (150) ;
the method being **characterized by**
- at least one step of returning to the entirely autonomous driving mode (200, 220, 240, 260) activated from the transitional mode following the detection of a second action of the driver that is different from the first action and interpreted as a wish to return to the entirely autonomous driving mode (190, 210, 230, 250).

2. The method for operating an automated drive assistance system according to Claim 1, **characterized in that** the action or actions which are to be interpreted by the system as a wish of the driver to return to the entirely autonomous driving mode can vary as a function of the first action previously carried out by the driver and having caused the passing to the transitional driving mode.

3. The method for operating an automated drive assistance system according to one of Claims 1 or 2, **characterized in that** the first action consists of the driver depressing the brake pedal or of a certain manipulation of a control member of the system.

4. The method for operating an automated drive assistance system according to Claim 3, **characterized in that** the manipulations which are to be interpreted as a wish to exit the entirely autonomous driving mode are the pressing of the deactivation button of the current drive assistance mode, and the moving of the selector of the drive assistance mode to the stop position or to another drive assistance mode.

5. The method for operating an automated drive assistance system according to one of Claims 1 to 4, **characterized in that** the second action interpreted as a wish to return to the entirely autonomous driving mode consists in the driver depressing the accelerator pedal or in a certain manipulation of a control member of the system.

6. The method for operating an automated drive assistance system according to Claim 5, **characterized in that** the manipulations which are to be interpreted as a wish to return to the entirely autonomous driving mode are comprised from the following manipulations: pressing on one of the two adjustment buttons for the increase or decrease of a nominal speed, pressing on the activation button of the selected assistance mode, and the repositioning of the mode selector towards the entirely autonomous assistance mode.

7. The method for operating an automated drive assistance system according to one of Claims 1 to 6, **characterized in that** the system endeavours to follow a predefined nominal speed by maintaining a minimum safety distance with the preceding vehicle during driving in the entirely autonomous mode.

8. The method for operating an automated drive assistance system according to Claim 7, **characterized in that** the predefined nominal speed can vary between the initial step of driving in the entirely autonomous mode (100) and the step of returning to this same mode (200, 220, 240, 260) as a function of the first and second actions carried out by the driver.

9. The method for operating an automated drive assistance system according to one of Claims 7 or 8, **characterized in that** the system continues to maintain a minimum safety distance with the preceding vehicle during driving in the transitional mode.

10. The method for operating an automated drive assistance system according to one of Claims 1 to 9, **characterized in that** the system emits a visual and/or audible warning notifying the driver that he must quickly take back control of the vehicle (140) when the speed of the vehicle passes below a predetermined threshold during driving in the transitional mode (130) .
